# EUROPEAN PATENT APPLICATION

(11) **EP 4 432 428 A1**
(43) Date of publication of application: **18.09.2024**
(21) Application number: 24163765.1
(22) Date of filing: 15.03.2024
(51) Int. Cl.: H01M 50/103, H01M 50/148, H01M 50/176, H01M 50/184, H01M 50/188, H01M 50/593

(54) **OUTER TERMINAL CONNECTION STRUCTURE OF SECONDARY BATTERY**

(30) Priority: 17.03.2023 KR 20230034913
(71) Applicant: Samsung SDI Co., Ltd., Yongin-si, Gyeonggi-do 17084 (KR)
(72) Inventor: Bae, Kwang Soo, 17084 Yongin-si, Gyeonggi-do (KR); Yong, Jun Sun, 17084 Yongin-si, Gyeonggi-do (KR); Lee, Jun Hyung, 17084 Yongin-si, Gyeonggi-do (KR); Kim, Jung Soo, 17084 Yongin-si, Gyeonggi-do (KR)
(74) Representative: Gulde & Partner

(57) **Abstract**

An outer terminal connection structure of a secondary battery, includes: a first current collector to be welded to non-coating portion tabs of an electrode assembly; a second current collector electrically connected to the first current collector; a cap plate above the second current collector, and connected to an opening of a case, the cap plate having a plate hole; an outer terminal above the cap plate, and electrically connected to the second current collector; an insulator passing through the cap plate to be located above and below the cap plate, the insulator to support the outer terminal at an upper side, and contact the second current collector at a lower side; and a terminal connection part passing through the plate hole to electrically connect the second current collector to the outer terminal. The insulator and the second current collector include a rotation prevention structure to restrict a relative rotation.

## Description

### CROSS-REFERENCE TO RELATED APPLICATIONS

This application claims priority to and the benefit of Korean Patent Application No. 10-2023-0034913, filed on March 17, 2023, in the Korean Intellectual Property Office, the entire disclosure of which is incorporated by reference herein.

### BACKGROUND

### 1. Field

Aspects of embodiments of the present disclosure relate to an outer terminal connection structure of a secondary battery.

### 2. Description of the Related Art

Secondary batteries are rechargeable, unlike primary batteries. From among the secondary batteries, a low capacity battery including a battery cell in the form of a pack may be used in portable small electronic devices, such as cellular phones and camcorders. A high capacity battery module including tens of battery packs connected to one another may be used as a power source for driving motors, for example, such as those of hybrid vehicles, electric vehicles, and the like.

The above information disclosed in this Background section is for enhancement of understanding of the background of the present disclosure, and therefore, it may contain information that does not constitute prior art.

### SUMMARY

One or more embodiments of the present disclosure are directed to an outer terminal connection structure having a reduced number of components, and implemented with a simplified structure.

One or more embodiments of the present disclosure are directed to an outer terminal connection structure that is capable of preventing or substantially preventing relative rotation between a second current collector and an insulator that is disposed above the second current collector to be in contact with the second current collector.

According to one or more embodiments of the present disclosure, an outer terminal connection structure of a secondary battery, includes: a first current collector configured to be welded to non-coating portion tabs of an electrode assembly; a second current collector electrically connected to the first current collector; a cap plate above the second current collector, and connected to an opening of a case, the cap plate having a plate hole; an outer terminal above the cap plate, and electrically connected to the second current collector; an insulator passing through the cap plate to be located above and below the cap plate, the insulator being configured to support the outer terminal at an upper side of the insulator, and contact the second current collector at a lower side of the insulator; and a terminal connection part passing through the plate hole to electrically connect the second current collector to the outer terminal. The insulator and the second current collector are in surface contact with each other, and the insulator and the second current collector include a rotation prevention structure to restrict a relative rotation of the insulator and the second current collector.

In an embodiment, the insulator may include: a lower insulating part below the cap plate; an upper insulating part above the cap plate; and an intermediate insulating part extending along an inner circumferential surface of the cap plate to connect the lower insulating part to the upper insulating part. The outer terminal may be insulated from the cap plate through the insulator, and the cap plate may be insulated from the second current collector through the insulator.

In an embodiment, the rotation prevention structure may include: a protruding structure on a bottom surface of the lower insulating part; and a concave structure in a top surface of the second current collector at a position corresponding to the protruding structure.

In an embodiment, the rotation prevention structure may include: a concave structure in a bottom surface of the lower insulating part; and a protruding structure on a top surface of the second current collector at a position corresponding to the concave structure.

In an embodiment, each of the protruding structure and the concave structure may have a closed line shape extending in a circular or polygonal shape, and the relative rotation of the insulator and the second current collector may be restricted as the protruding structure and the concave structure are engaged with each other.

In an embodiment, each of the protruding structure and the concave structure may have at least one straight line shape, and the relative rotation of the insulator and the second current collector may be restricted as the protruding structure and the concave structure are engaged with each other.

In an embodiment, each of the protruding structure and the concave structure may have a pair of longitudinal straight line shapes and a pair of horizontal straight line shapes, and the relative rotation of the insulator and the second current collector may be restricted as the protruding structure and the concave structure are engaged with each other.

In an embodiment, the terminal connection part may be integral with the second current collector.

In an embodiment, the terminal connection part may be a separate component from the second current collector.

According to one or more embodiments of the present disclosure, an outer terminal connection structure of a secondary battery may be provided. The outer terminal connection structure may have a reduced number of components, may electrically connect an outer terminal to a second current collector, and/or may prevent or substantially prevent the second current collector from being tilted.

However, the aspects and features of the present disclosure are not limited to those described above, and additional aspects and features will be set forth, in part, in the description that follows, and in part, may be apparent from the description, or may be learned by practicing one or more of the presented embodiments of the present disclosure.

### BRIEF DESCRIPTION OF THE DRAWINGS

The above and other aspects and features of the present disclosure will be more clearly understood from the following detailed description of the illustrative, non-limiting embodiments with reference to the accompanying drawings, in which:
FIG. 1 illustrates a perspective view of a secondary battery according to a comparative example;
FIG. 2 illustrates a perspective view of an outer terminal connection structure of a secondary battery according to one or more embodiments;
FIG. 3 illustrates a perspective view of a bottom surface of a cap plate and a second current collector shown in FIG. 2;
FIG. 4A illustrates a cross-sectional view taken along the line A-A in FIG. 2;
FIG. 4B illustrates a cross-sectional view taken along the line B-B in FIG. 2;
FIG. 5A illustrates a cross-sectional view of the outer terminal connection structure of the secondary battery according to one or more embodiments;
FIG. 5B illustrates a cross-sectional view of an outer terminal connection structure of a secondary battery according to one or more embodiments;
FIGS. 6A-6D illustrate views of various configurations of a rotation prevention structure shown in FIG. 5A;
FIGS. 7A-7D illustrate views of various configurations of a rotation prevention structure shown in FIG. 5B; and
FIG. 8 is a photograph of a case in which the second current collector is tilted to one side due to a biased force to cause welding defects.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

In the drawings, the relative sizes, thicknesses, and ratios of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

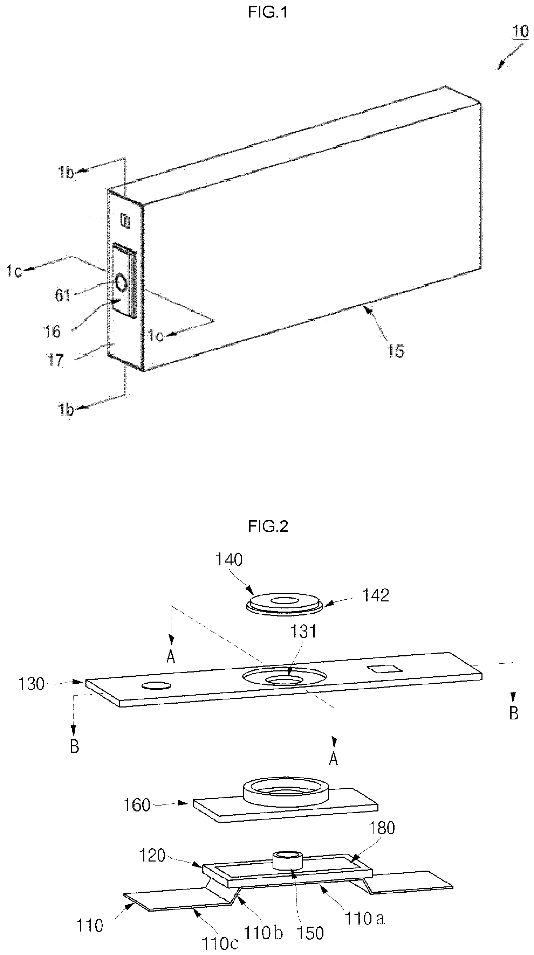

FIG. 1 illustrates a perspective view of a secondary battery according to a comparative example.

A secondary battery 10 according to the comparative example may include a case 15, an electrode assembly (not shown), an outer terminal 16, and a cap plate 17. The electrode assembly, in which a separator may be disposed between a positive electrode plate and a negative electrode plate, and an electrolyte are embedded in the case 15, and the cap plate 17 is welded to the case 15.

According to the comparative example, a separate rivet may be used to electrically connect the outer terminal 16 to a current collector. For example, after forming a hole in the cap plate 17, a hollow type rivet may be installed to pass through the hole. A gasket may be disposed around the hole to insulate the rivet from surrounding components. The outer terminal disposed above the cap plate 17 and the rivet are in physical contact with each other. The outer terminal disposed above the cap plate 17 and the rivet may be in direct contact with each other. The rivet and the current collector disposed below the cap plate may be in physical contact with each other. The rivet may be welded to the current collector to conduct electricity between the current collector and the outer terminal.

According to comparative example, a sub tab is used to electrically connect the current collector to a current collection plate disposed below the current collector. In other words, a method in which the current collector and the current collection plate are connected to each other through laser welding using the sub tab as a medium may be adopted. A first edge of the sub tab may be pre-assembled to the current collector through the laser welding, and a second edge disposed at an opposite side of the first edge of the sub tab may be assembled to the current collector through the laser welding.

Current collected through the current collection plate may be transmitted to the current collector via the sub tab, and the current collected through the current collector may be transmitted to the outer terminal via the hollow type rivet.

In other words, the flow of current in an assembly method according to a coupling structure of the comparative example may sequentially flow through the current collection plate - > the sub tab -> the current collector -> the rivet -> the outer terminal.

However, the coupling structure according to the comparative example may require a larger number of accessories used for the electrical connection between the components, and thus, the assembly structure may be complicated.

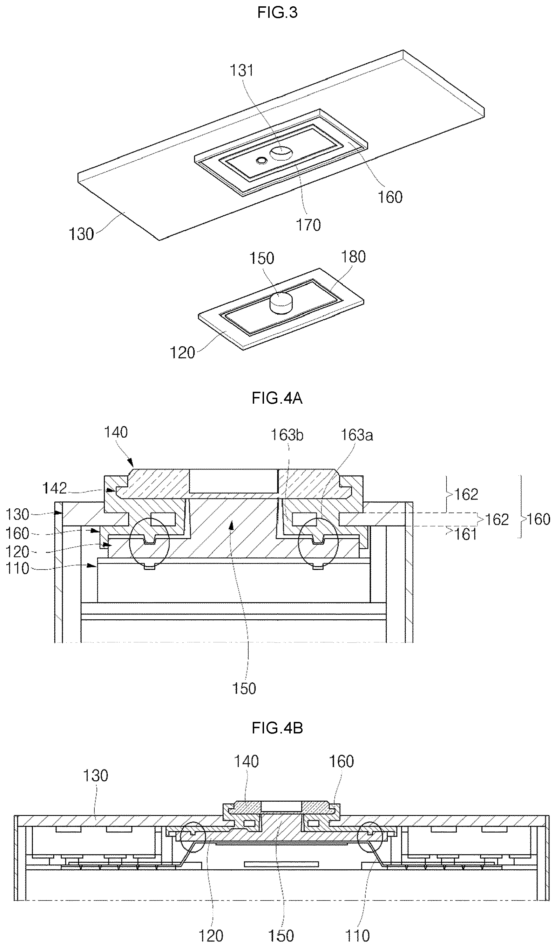

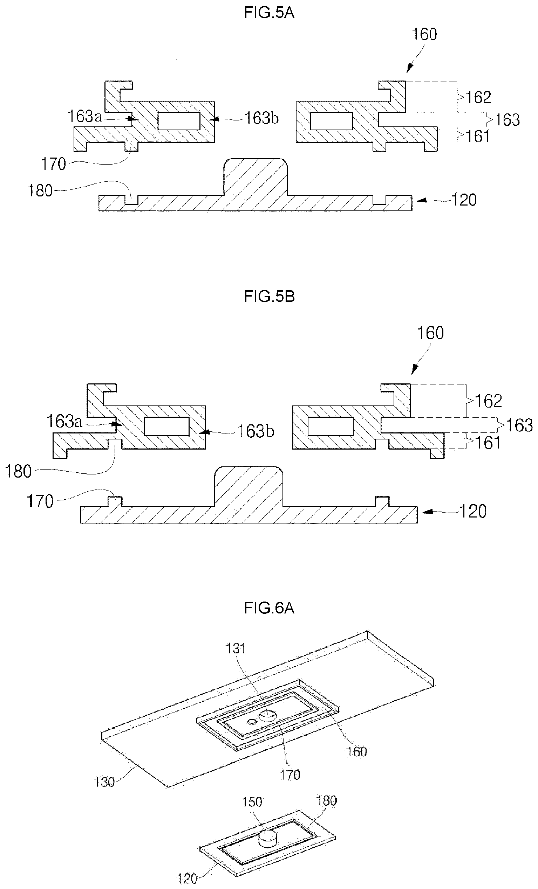

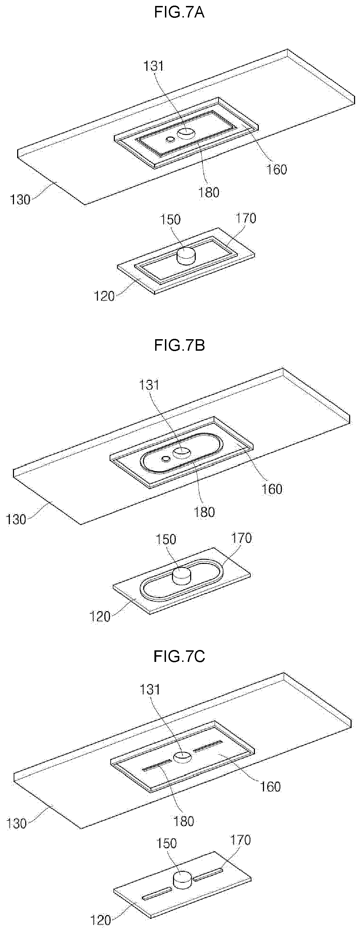

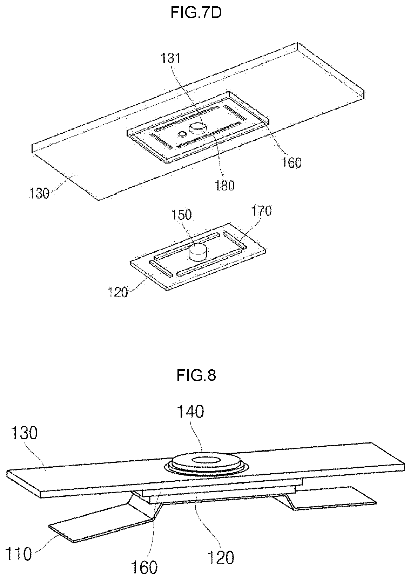

FIG. 2 illustrates a perspective view of an outer terminal connection structure of a secondary battery according to one or more embodiments. FIG. 3 illustrates a perspective view of a bottom surface of a cap plate and a second current collector shown in FIG. 2. FIG. 4A illustrates a cross-sectional view taken along the line A-A in FIG. 2. FIG. 4B illustrates a cross-sectional view taken along the line B-B in FIG. 2. FIG. 5A illustrates a cross-sectional view of the outer terminal connection structure of the secondary battery according to one or more embodiments. FIG. 5B illustrates a cross-sectional view of an outer terminal connection structure of a secondary battery according to one or more embodiments. FIGS. 6A through 6D illustrate views of various configurations of a rotation prevention structure shown in FIG. 5A. FIGS. 7A through 7D illustrate views of various configurations of a rotation prevention structure shown in FIG. 5B. FIG. 8 is a photograph of a case in which the second current collector is tilted to one side due to a biased force to cause welding defects.

Hereinafter, an outer terminal connection structure of a secondary battery according to one or more embodiments of the present disclosure will be described in more detail with reference to the figures.

The outer terminal connection structure according to one or more embodiments of the present disclosure may include a first current collector 110 coupled to, e.g. welded to non-coating portion tabs of an electrode assembly, a second current collector 120 electrically connected to the first current collector 110, a cap plate 130 disposed above the second current collector 120 and connected to (e.g., coupled to or attached to) an opening of a case, and an outer terminal 140 disposed above the cap plate 130 and electrically connected to the second current collector 120.

The first current collector 110 may be welded to the non-coating portion tabs (e.g., negative electrode non-coating portion tabs) of the electrode assembly. The electrode assembly may be provided by stacking or winding a stack of a negative electrode plate, a separator, and a positive electrode plate, each of which may be provided as a thin plate shape or film shape. The negative electrode plate may be provided by applying a negative electrode active material, such as graphite or carbon, to a negative electrode current collector provided as metal foil, such as copper, a copper alloy, nickel, or a nickel alloy.

The negative electrode plate may include a negative electrode non-coating portion tab (e.g., a negative electrode tab), which may be an area on which the negative electrode active material is not applied. The negative electrode non-coating portion tab may be provided by cutting the negative electrode plate, so that the negative electrode plate protrudes in a lateral direction in advance if the negative electrode plate is manufactured, and approximately two negative electrode non-coating portion tabs may be provided to protrude in the lateral direction of the electrode assembly. In some embodiments, the negative electrode non-coating portion tabs may be respectively provided at upper and lower sides with respect to the electrode assembly. In some embodiments, if the non-coating portion tabs are provided to be spaced apart from each other at the upper and lower sides with respect to the electrode assembly, the first current collector 110 may also be provided in a similar form corresponding thereto.

The first current collector 110 may be divided into a central first area 110a, and second and third areas 110b and 110c at both sides (e.g., opposite sides) of the first area 110a. In some embodiments, the first current collector 110 may have a shape in which the first to third areas 110a to 110c are disposed on the same plane as each other, for example, such as a structure without a stepped portion. In some embodiments, as illustrated in FIG. 2, the first current collector 110 may have a structure in which a stepped portion is provided between the first area 110a and the second and third areas 110b and 110c. The first area 110a may be an area that is electrically connected to (e.g., electrically coupled to) the second current collector 120, and may be spaced apart from the electrode assembly and the non-coating portion tabs. The second areas 110b may be bent to extend outward and downward from the first area 110a to the non-coating portion tabs disposed at both sides (e.g., opposite sides) thereof. The third areas 110c may extend from the second areas 110b, and may be welded to the non-coating portion tabs, respectively. The stepped portion may be applied to the first current collector 110 as described above to realize an elasticity. The first current collector 110 may have the stepped portion (e.g., stepped structure) to provide its own elasticity, and thus, adhesion to the second current collector 120 disposed thereon may further increase to improve a welding quality with the second current collector 120 thereon. In some embodiments, the first current collector 110 may include copper, nickel, aluminum, or stainless steel.

The second current collector 120 may be electrically connected to the first current collector 110. In some embodiments, as illustrated in FIG. 2, the second current collector 120 may be provided on the first area 110a of the first current collector 110. The second current collector 120 may be integrated (e.g., integrally formed) with the first current collector 110, or may be provided separately and then welded to the first current collector 110. According to one or more embodiments of the present disclosure, the second current collector 120 may be directly connected to (e.g., directly coupled to or attached to) the top surface of the first current collector 110. In some embodiments, the second current collector 120 may be previously connected to (e.g., coupled to or attached to) the top surface of the first current collector 110 in a laser welding manner.

As described above, in the outer terminal coupling structure according to the comparative example, a sub tab may be used for the electrical connection between the first current collector and the second current collector. In other words, a first edge of the sub tab may be laser welded to the first current collector 110, and a second edge of the sub tab may be laser welded to the second current collector 120. Under this structure, current collected through the first current collector 110 may be transmitted to the second current collector 120 via the sub tab. According to some embodiments of the present disclosure, the second current collector and the first current collector may be directly connected to (e.g., directly coupled to) each other without using an intermediate medium (e.g., such as the sub tab) for transmitting the current. In other words, in some embodiments, the sub tab may be omitted.

In some embodiments, the second current collector 120 may include (e.g., may be made of) the same material as that of the first current collector 110. In some embodiments, the second current collector 120 may include copper, nickel, aluminum, or stainless steel.

In some embodiments, the second current collector 120 may have a thickness greater than that of the first current collector 110, and a width greater than that of the first current collector 110. The current collection effect may be improved by designing the longitudinal cross-section of the second current collector 120 to be larger than that of the first current collector 110.

In some embodiments, the cap plate 130 may be disposed above the second current collector 120, and may be coupled to the opening of the case. The cap plate 130 may be welded (e.g., via laser welded) to the opening of the case along a circumference thereof. In some embodiments, the cap plate 130 may include copper, nickel, aluminum, or stainless steel.

In some embodiments, the outer terminal 140 may be disposed above the cap plate 130. As described in more detail below, the outer terminal 140 may have a disk shape, for example, as illustrated in FIG. 2, or may have a flat hexahedral shape. However, the shape of the outer terminal 140 is not limited thereto. In some embodiments, the outer terminal 140 is fixed by being hooked with a hook part of an upper insulating part 162 (e.g., see FIGS. 4A, 5A, and 5B) of the insulator 160. The outer terminal 140 may be constituted by a terminal body and a flange protruding outward from an outer circumferential surface of a lower end thereof.

A plate hole 131 may be defined in the cap plate 130, so that the upper and lower sides of the cap plate 130 spatially communicate with each other. A terminal connection part 150, which will be described in more detail below, may be disposed to pass through the plate hole 131.

The terminal connection part 150 may electrically connect the second current collector 120 disposed below the cap plate 130 to the outer terminal 140 disposed at least partly above the cap plate 130. The terminal connection part 150 may be disposed on the second current collector 120, or on the outer terminal 140 (e.g., on a lower surface thereof facing towards the second current collector 120).

In some embodiments, the terminal connection part 150 may be disposed on the second current collector 120. In some embodiments, the terminal connection portion 150 may protrude upward by a suitable height (e.g., a predetermined height) from a portion of a top surface of the second current collector 120. In some embodiments, the terminal connection part 150 may be integrated with the second current collector 120, or the terminal connection part 150 may be provided as a separate component from the second current collector 120. The terminal connection part 150 may pass through the plate hole 131, and may be connected to the bottom of the outer terminal 140. A bottom surface of the outer terminal 140 may be provided in a flat or substantially flat shape, and may be in contact with a top surface of the terminal connection part 150. In some embodiments, a recess may be defined in a bottom surface of the outer terminal 140 in a shape corresponding to the shape of the terminal connection part 150 to accommodate at least a portion of the terminal connection part 150.

In other embodiments, the terminal connection part 150 may be disposed on the outer terminal 140. In other words, the terminal connection part 150 may protrude downward from the bottom surface of the outer terminal 140, pass through the plate hole 131, and be connected to the top surface of the second current collector 120. In some embodiments, the top surface of the second current collector 120 may be provided to have a flat or substantially flat shape to be in surface contact with the bottom surface of the terminal connection part 150. In some embodiments, a recess may be defined in the top surface of the second current collector 120 in a shape corresponding to the shape of the terminal connection part 150 to accommodate at least a portion of the terminal connection part 150.

The terminal connection part 150 may include (e.g., may be made of) a suitable material capable of conducting electricity. The terminal connection part 150 may include (e.g., may be made of) the same material as that of the second current collector 120 and the outer terminal 140, for example, such as copper, nickel, aluminum, or stainless steel. A three-dimensional shape of the terminal connection part 150 is not be limited thereto, and may be, for example, one of a cylindrical shape, a conical shape, a square shape, and/or a hexahedral shape. In some embodiments, the plate hole 131 through which the terminal connection part 150 passes may be punched in a shape corresponding to the terminal connection part 150.

In some embodiments, if the terminal connection part 150 is disposed on the second current collector 120, the terminal connection part 150 and the outer terminal 140 may be electrically connected to each other by welding. In some embodiments, if the terminal connection part 150 is disposed on the outer terminal 140, the terminal connection part 150 and the second current collector 120 may be electrically connected to each other by welding. For example, a method for performing the welding in a state in which a clad sheet (e.g., two layers that are thermally compressed) made of aluminum (2 T) and copper (0.5 T to 0.7 T) is disposed between the outer terminal 140 and the second current collector 120 may be adopted.

According to one or more embodiments of the present disclosure, the insulator 160 that insulates the outer terminal 140, the cap plate 130, and the second current collector 120 may be further provided. In some embodiments, the insulator 160 may pass through the cap plate 130, and may be disposed above and below the cap plate 130, such that the insulator 160 supports the outer terminal 140 thereabove, and may be in contact with the second current collector 120 therebelow (e.g., at a lower side thereof).

The outer terminal 140 and the cap plate 130, and the cap plate 130 and the second current collector 120, may be electrically insulated from each other through the insulator 160 to prevent or substantially prevent an electrical short circuit from occurring. In some embodiments, the outer terminal 140 may be fixed in a desired position through the insulator 160, and the outer terminal 140 and the terminal connection part 150 may be electrically connected to each other to maintain or substantially maintain the insulated state from the cap plate 130.

In some embodiments, the insulator 160 may include a lower insulating part 161 disposed below the cap plate 130, an upper insulating part 162 disposed above the cap plate 130, and an intermediate insulating part 163 extending along an inner circumferential surface of the plate hole 131 to connect the lower insulating part 161 to the upper insulating part 162.

In more detail, the lower insulating part 161 may have a hexahedral shape as illustrated in FIG. 3, and may have, for example, a planar shape corresponding to the second current collector 120. A bottom surface of the lower insulating part 161 may be in contact with the second current collector 120, and a top surface of the lower insulating part 161 may be in contact with a bottom surface of the cap plate 130. A through-groove through which the terminal connection part 150 passes may be provided in the lower insulating part 161. The upper insulating part 162 may be disposed to be spaced upward from the lower insulating part 161 using the intermediate insulating part 163 as a medium, and may be seated on a top surface of the cap plate 130. In some embodiments, as illustrated in FIG. 2, a low-level area that is lower than a surrounding area thereof may be provided on the top surface of the cap plate 130 with a size corresponding to that of a plane of the upper insulating part 162, and the upper insulating part 162 may be seated on the low-level area, and thus, may be fixed in a desired position in a direction of the plane.

For example, the upper insulating part 162 may have a cylindrical sidewall surrounding (e.g., around a periphery of) the outer terminal 140 to accommodate the disk-shaped outer terminal 140 therein as illustrated in FIG. 2. In some embodiments, an upper side of the upper insulating part 162 may be opened, so that the outer terminal 140 is inserted downward therein, and a bottom surface of the upper insulating part 162 may be provided with the through-groove through which the terminal connection part 150 passes. A hook part may be installed on an upper end of the cylindrical sidewall to extend along a circumference of the sidewall, and may prevent or substantially prevent the outer terminal 140 from being separated. The intermediate insulating part 163 may include at least one post portion 163a connecting the upper insulating part 162 to the lower insulating part 161, and an inner circumferential wall portion 163b extending along the inner circumferential surface of the plate hole 131 to connect the lower insulating part 161 to the upper insulating part 162.

The outer terminal 140 may be inserted into and fixed to the upper insulating part 162, and then, a flange 142 of the outer terminal 140 may be fixed in position to the sidewall hook part of the upper insulating part 162. Because the insulator 160 is mounted on the cap plate 130 in a state of accommodating the outer terminal 140, the outer terminal 140 may be fixed to the cap plate 130 using the insulator 160 as a medium. As illustrated in FIG. 2, the outer terminal 140 may have a circular donut shape. In some embodiments, the shape of the upper insulating part 162 may include the cylindrical sidewall, so as to accommodate the disk-shaped outer terminal 140 therein as described above. In some embodiments, the outer terminal 140 may have a flat or substantially flat hexahedral shape. In some embodiments, the shape of the upper insulating part 162 may include a square sidewall, so as to accommodate a square-shaped outer terminal 140 therein.

According to one or more embodiments of the present disclosure, a rotation prevention structure may be applied to the insulator 160 and the second current collector 120. In some embodiments, as described above, the insulator 160, or in more detail, the lower insulating part 161 thereof, and the second current collector 120 may be in surface contact with each other, and thus, a structure for preventing or substantially preventing the relative rotation between the lower insulating part 161 and the second current collector 120 from occurring may be applied to the lower insulating part 161 and the second current collector 120.

As described above, in the outer terminal connection structure according to one or more embodiments of the present disclosure, the outer terminal 140 and the second current collector 120 may be directly connected to each other through the terminal connection part 150 without additional accessories, such as the hollow type rivet or gasket described above. For example, penetration welding may be performed. In a non-limiting embodiment, penetration welding may be a method for performing welding in a state in which a clad sheet (e.g., two layers that are thermally compressed) e.g. made of aluminum (e.g. about 2 T) and copper (about e.g. 0.5 T to about 0.7 T) is disposed between the outer terminal 140 and the second current collector 120. However, if performing the penetration welding, force may be usually applied in a Z-axis direction (e.g., in an upward and downward direction) to improve adhesion, but in this process, a distribution of force in the Z-axis direction may be uneven and be applied biased to one side. Due to this bias of force, the second current collector may rotate (e.g., may be tilted) around an X-axis or a Y-axis, resulting in a defective welding between the second current collector and the outer terminal. For example, as illustrated in FIG. 8, the second current collector 120 may be subjected to the force biased in the Z-axis direction, and may be tilted to one side if the welding is finished, such that positional defects of the first current collector 110 disposed below the second current collector 120 may occur.

On the other hand, according to one or more embodiments of the present disclosure, the structure that prevents or substantially prevents the relative rotation may be applied to the lower insulating part 161 and the second current collector 120. In other words, the lower insulating part 161 and the second current collector 120 may be provided with respective engaging means which after engaging with each other prevent or substantially prevent relative rotation around the X-axis and/or Y-axis. The engaging means may comprise at least one protrusion and at least one recess or indentation. The engaging means may engage by force or form fit. In other words, the rotation prevention structure may provide a protruding structure 170 or a recessed or concave structure 180 (in the following without restriction named concave structure) to the lower insulating part 161 and the second current collector 120, respectively, which are two components that are in contact with each other, and if the lower insulating part 161 and the second current collector 120 are in surface contact with each other, the protruding structure 170 and the concave structure 180 may be engaged with each other to prevent or substantially prevent the relative rotation around the X-axis and/or the Y-axis.

If both a bottom surface of the lower insulating part 161 of the insulator 160 and a top surface of the second current collector 120 are provided as flat surfaces, the second current collector 120 may freely rotate (e.g., may be tilted) in the X-axis and/or Y-axis directions with respect to the terminal connection part 150. However, if the above-described relative rotation prevention structure is applied, the engaging means, e.g. the protruding structure 170 and the concave structure 180 may be engaged with each other, so as to be restricted with each other, thereby suppressing the free rotation (e.g., the tilt) in the X-axis direction or the Y-axis direction with respect to the terminal connection part 150. Therefore, even if force is applied in the Z-axis direction during the welding process, and the force is biased to one side, the tilting of the second current collector 120 may be prevented or substantially prevented.

As illustrated in FIG. 5A, which is a cross-sectional view of the outer terminal connection structure of the secondary battery according to one or more embodiments, the rotation prevention structure may include the protruding structure 170 on the bottom surface of the lower insulating part 161, and the concave structure 180 in the top surface of the second current collector 120. In some embodiments, the protruding structure 170 may be provided in a shape that protrudes downward from the bottom surface of the lower insulating part 161 toward the second current collector 120, and the concave structure 180 may be provided in a concave recessed shape in the top surface of the second current collector 120. In some embodiments, the concave structure 180 may be provided at a position corresponding to the protruding structure 170. In some embodiments, as the protruding structure 170 is engaged with the concave structure 180, the relative rotation of the insulator 160 and the second current collector 120 may be restricted.

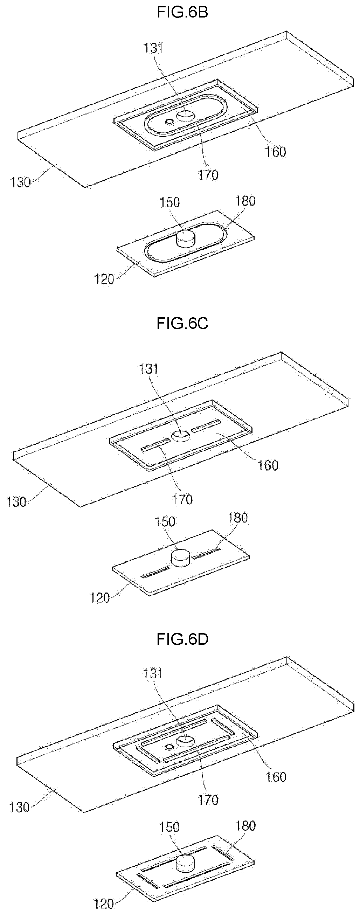

The protruding structure 170 may be configured to form a closed line extending in a circular or polygonal shape around the plate hole 131 of the lower insulating part 161 (e.g., see FIGS. 6A and 6B). In some embodiments, the concave structure 180 may have a corresponding shape at a position corresponding to the protruding structure 170, and may form the closed line extending in a circular or polygonal shape around the position of the terminal connection part 150 of the second current collector 120.

In some embodiments, the protruding structure 170 may be provided as at least one straight line (e.g., see FIG. 6C). In some embodiments, the protruding structure 170 may be provided as a straight line extending longer in any suitable direction (e.g., such as a longitudinal direction or a lateral direction, but not limited thereto) at any suitable position on the bottom surface of the lower insulating part 161. In some embodiments, the concave structure 180 may be provided as a straight line with a corresponding shape at a position corresponding to the protruding structure 170 on the top surface of the second current collector 120.

In some embodiments, the protruding structure 170 may be provided as a pair or plurality of longitudinal straight lines, and a pair or plurality of horizontal straight lines (e.g., see FIG. 6D). In some embodiments, the protruding structure 170 may be provided as two pairs of straight lines extending longer in the longitudinal and transverse directions, respectively, at any suitable position on the bottom surface of the lower insulating part 161. In some embodiments, the concave structure 180 may be provided as two pairs of straight lines of corresponding shapes at positions corresponding to the protruding structure 170 on the top surface of the second current collector 120.

As illustrated in FIG. 5B, which is a cross-sectional view of a terminal connection structure of a secondary battery according to one or more embodiments, the rotation prevention structure may adopt a structure in which a concave structure 180 is provided in the bottom surface of the lower insulating part 161, and a protruding structure 170 is provided on the top surface of the second current collector 120. In some embodiments, the protruding structure 170 may be provided in a shape that protrudes upward from the top surface of the second current collector 120 toward the lower insulating part 161, and the concave structure 180 may be provided in a concave recessed shape in the bottom surface of the lower insulating part 161. In some embodiments, the concave structure 180 may be provided at a position corresponding to the protruding structure 170. As the protruding structure 170 is engaged with the concave structure 180, the relative rotation of the insulator 160 and the second current collector 120 may be restricted.

The protruding structure 170 may form a closed line extending in a circular or polygonal shape around the terminal connection part 150 of the second current collector 120, and the concave structure 180 may have a corresponding shape at a corresponding position to the protruding structure 170 to form a closed line extending in a circular or polygonal shape around the plate hole 131 of the lower insulating part 161 (e.g., see FIGS. 7A and 7B).

In some embodiments, the protruding structure 170 and the concave structure 180 may be provided as at least one straight line (e.g., see FIG. 7C), or the protruding structure 170 and the concave structure 180 may be provided in a pair of longitudinal straight lines and a pair of horizontal straight lines (e.g., see FIG. 7D).

According to the coupling structure of one or more embodiments of the present disclosure, the number of components may be reduced, and the electrical connection between the outer terminal and the second current collector may be realized through a simplified structure. In other words, the first current collector and the second current collector may be directly coupled to each other through a suitable method such as laser welding, and thus, the first current collector and the second current collector may be electrically connected without using a sub tab component. In some embodiments, the terminal connection may be provided on the second current collector, and the outer terminal may have the structure (e.g., the recess/flat shape) capable of accommodating the terminal connection part. In other embodiments, the terminal connection may be provided on the outer terminal, and the second current collector may have the structure (e.g., the recess/flat shape) capable of accommodating the terminal connection part. As a result, the second current collector and the outer terminal may be electrically connected to each other without the hollow rivet used in the comparative example described above.

In some embodiments, according to the coupling structure, the relative rotation prevention structure may be provided on the surface contact area between the insulator and the second current collector to prevent or substantially prevent the relative rotation of the second current collector with respect to the insulator, thereby preventing or substantially preventing the relative rotation of the second current collector with respect to the insulator. Thus, welding defects may be reduced during external penetration welding.

As described above, in some embodiments, the number of components may be reduced, and the electrical connection between the outer terminal and the second current collector may be realized through a simplified structure.

As described above, in some embodiments, the relative rotation of the second current collector with respect to the insulator may be prevented or substantially prevented to reduce welding defects between the outer terminal and the second current collector during external penetration welding.

However, the present disclosure is not limited to the aspects and features described above, and additional aspects and features may be apparent to those having ordinary skill in the art from the description, or may be learned by practicing one or more of the presented embodiments of the present disclosure.

The foregoing is illustrative of some embodiments of the present disclosure, and is not to be construed as limiting thereof. Although some embodiments have been described, those skilled in the art will readily appreciate that various modifications are possible in the embodiments without departing from the scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

## Claims

1. An outer terminal connection structure of a secondary battery (10), comprising:
a first current collector (110) configured to be welded to non-coating portion tabs of an electrode assembly;
a second current collector (120) electrically connected to the first current collector (110);
a cap plate (17, 130) above the second current collector (120), and coupled to an opening of a case (15), the cap plate (17, 130) having a plate hole (131);
an outer terminal (16, 140) above the cap plate (17, 130), and electrically connected to the second current collector (120);
an insulator (160) passing through the cap plate (17, 130) to be located above and below the cap plate (17, 130), the insulator (160) being configured to support the outer terminal (16, 140) at an upper side of the insulator (160), and contact the second current collector (120) at a lower side of the insulator (160); and
a terminal connection part passing through the plate hole (131) to electrically connect the second current collector (120) to the outer terminal (16, 140),
wherein the insulator (160) and the second current collector (120) are in surface contact with each other, and
wherein the outer terminal (16, 140) connection structure comprise a rotation prevention structure configured to restrict a relative rotation of the insulator (160) and the second current collector (120).

2. The outer terminal connection structure as claimed in claim 1, wherein the insulator (160) comprises:
a lower insulating part (161) below the cap plate (17, 130);
an upper insulating part (162) above the cap plate (17, 130); and
an intermediate insulating part (163) extending along an inner circumferential surface of the cap plate (17, 130) to connect the lower insulating part (161) to the upper insulating part (162), and
wherein the outer terminal (16, 140) is insulated from the cap plate (17, 130) through the insulator (160), and the cap plate (17, 130) is insulated from the second current collector (120) through the insulator (160).

3. The outer terminal connection structure as claimed in claim 2, wherein the rotation prevention structure comprises:
a protruding structure (170) on a bottom surface of the lower insulating part (161); and
a concave structure (180) in a top surface of the second current collector (120) at a position corresponding to the protruding structure (170).

4. The outer terminal connection structure as claimed in claim 2, wherein the rotation prevention structure comprises:
a concave structure (180) in a bottom surface of the lower insulating part (161); and
a protruding structure (170) on a top surface of the second current collector (120) at a position corresponding to the concave structure (180).

5. The outer terminal connection structure as claimed in claim 3, wherein each of the protruding structure (170) and the concave structure (180) comprises a closed line shape extending in a circular or polygonal shape, and
wherein the relative rotation of the insulator (160) and the second current collector (120) is restricted by engaging the protruding structure (170) and the concave structure (180) with each other.

6. The outer terminal connection structure as claimed in claim 4, wherein each of the protruding structure (170) and the concave structure (180) comprises a closed line shape extending in a circular or polygonal shape, and
wherein the relative rotation of the insulator (160) and the second current collector (120) is restricted by engaging the protruding structure (170) and the concave structure (180) with each other.

7. The outer terminal connection structure as claimed in claim 3, wherein each of the protruding structure (170) and the concave structure (180) comprises at least one straight line shape, and
wherein the relative rotation of the insulator (160) and the second current collector (120) is restricted by engaging the protruding structure (170) and the concave structure (180) with each other.

8. The outer terminal connection structure as claimed in claim 4, wherein each of the protruding structure (170) and the concave structure (180) has at least one straight line shape, and
wherein the relative rotation of the insulator (160) and the second current collector (120) is restricted by engaging the protruding structure (170) and the concave structure (180) with each other.

9. The outer terminal connection structure as claimed in claim 7, wherein each of the protruding structure (170) and the concave structure (180) has a pair of longitudinal straight line shapes and a pair of horizontal straight line shapes, and
wherein the relative rotation of the insulator (160) and the second current collector (120) is restricted by engaging the protruding structure (170) and the concave structure (180) with each other.

10. The outer terminal connection structure as claimed in claim 8, wherein each of the protruding structure (170) and the concave structure (180) comprises a pair of longitudinal straight line shapes and a pair of horizontal straight line shapes, and
wherein the relative rotation of the insulator (160) and the second current collector (120) is restricted by engaging the protruding structure (170) and the concave structure (180) with each other.

11. The outer terminal connection structure as claimed in any one of claims 1 to 10, wherein the terminal connection part is integral with the second current collector (120).

12. The outer terminal connection structure as claimed in any one of the previous claims, wherein the terminal connection part is a separate component from the second current collector (120).

13. The outer terminal connection structure as claimed in any one of the previous claims, wherein the rotation prevention structure comprises engaging means provided on facing surfaces of the lower insulating part (161) and the second current collector (120) at corresponding locations and configured to engage with each other.

14. The outer terminal connection structure as claimed in any one of the previous claims, wherein the engaging means comprise at least one recess and at least one protrusion.

15. A secondary battery (10) comprising an outer terminal connection structure of any one of the previous claims.
